# FASCICULE DE BREVET EUROPEEN

(11) **EP 0 493 174 B1**
(45) Date de publication et mention de la délivrance du brevet: **20.09.1995**
(21) Numéro de dépôt: 91403385.7
(22) Date de dépôt: 13.12.1991
(51) Int. Cl.: H04L 12/42

(54) **Réseau de communication en boucle à sécurité de transmission**
Ringartiges Kommunikationsnetz mit Übertragungssicherung
Communication network with fault tolerant transmission

(30) Priorité: 18.12.1990 FR 9015829
(43) Date de publication de la demande: 01.07.1992
(73) Titulaire: MATRA COMMUNICATION, 29101 Quimper (FR)
(72) Inventeur: Lopez, Pierre, F-78390 Bois D'Arcy Cedex (FR); Fouques, Michel, F-92310 Sèvres (FR)
(74) Mandataire: Fruchard, Guy

(56) Documents cités:
- GB-A- 2 028 062
- US-A- 4 048 446

## Description

La présente invention concerne un réseau de communication en boucle à sécurité de transmission.

On connaît des réseaux de communication én boucle, en particulier des réseaux de communication multiservices, voix et données, comportant de façon générale au moins une unité de contrôle de boucle et une pluralité d'unités appelés unités de contrôle de grappe permettant un accès à la boucle par des utilisateurs, l'interface entre une grappe et la boucle étant assuré par l'automate et les répéteurs d'accès à la boucle. Afin d'assurer une continuité des communications en cas de défaillance de l'un des éléments du réseau, qu'il s'agisse d'une défaillance interne ou d'une défaillance provenant d'un événement externe tel que la coupure d'une ligne de transmission de la boucle, il est nécessaire de sécuriser le réseau.

On connaît, notamment des documents US-A-4,048,446 et GB-A-2.028.062 un réseau de communication en boucle comportant une unité de contrôle de boucle et une pluralité de grappes reliées en série par une ligne principale et une ligne de duplication parallèle, et au moins une ligne de court-circuit reliant une première grappe à une seconde grappe non adjacente à la première grappe et disposée en aval de celle-ci en référence à un sens de propagation de signaux dans la boucle, et des moyens pour privilégier une transmission par un tronçon de boucle comportant au moins une grappe intermédiaire entre la première et la seconde grappe. La ligne de court-circuit qui n'est pas reliée à la grappe intermédiaire peut passer par un chemin notablement différent du chemin suivi par les lignes principales de sorte que l'on améliore les chances de conserver la ligne de court-circuit intacte en cas de rupture des lignes principales. On augmente donc les possibilités d'assurer la permanence d'une transmission au moins entre la première et la seconde grappe ainsi que les autres grappes du réseau qui ne sont pas affectées par la défaillance intervenant entre la première et la seconde grappe. Toutefois, la ou les grappes qui sont situées entre la première et la seconde grappe ne sont plus reliées au réseau situé en amont et ne peuvent donc plus recevoir des signaux des grappes amont.

Selon l'invention, le réseau comporte au moins une ligne de rebroussement reliant la seconde grappe à une grappe intermédiaire disposée entre la première et la seconde grappe. Ainsi, dans le cas où l'interruption de communication entre la première grappe et la grappe intermédiaire résulte d'une rupture des lignes de transmission entre la première grappe et la grappe intermédiaire, les signaux provenant de la première grappe peuvent atteindre la seconde grappe en suivant tout d'abord la ligne de court-circuit puis la ligne de rebroussement et l'on assure ainsi un fonctionnement de la boucle complète.

Selon un autre aspect avantageux de l'invention en liaison avec un réseau fonctionnant avec une trame synchrone, le réseau selon l'invention comporte au moins une première unité de synchronisation de boucle et une seconde unité de synchronisation de boucle disposées en deux points séparés de la boucle et des moyens pour donner une priorité à l'une des unités de synchronisation de boucle. Ainsi, lorsque une partie de la boucle, qu'il s'agisse des lignes de transmission ou d'une unité de synchronisation de boucle, est détruite et que les lignes de court-circuit et les lignes de rebroussement permettent néanmoins le maintien d'un réseau en boucle, l'unité de synchronisation de boucle associée à la boucle ainsi reconstituée permet la poursuite de l'émission d'une trame synchrone dans cette boucle.

Dans le cas d'un réseau de communication en boucle relié à un réseau externe, la priorité est de préférence donnée à une unité de synchronisation de boucle synchronisée avec le réseau externe. En tout état de cause, la priorité est de préférence donnée à une unité de synchronisation de boucle qui apparaît synchronisée avec au moins une autre unité de synchronisation de boucle disposée en amont par référence à un sens de propagation des signaux dans la boucle.

D'autres caractéristiques et avantages de l'invention apparaîtront à la lecture de la description qui suit d'un mode de réalisation particulier non limitatif de l'invention en liaison avec les dessins ci-joints parmi lesquels :
- la figure 1 est une représentation schématique partielle d'un réseau de communication en boucle selon l'invention,
- la figure 2 est une représentation schématique d'une partie de réseau,

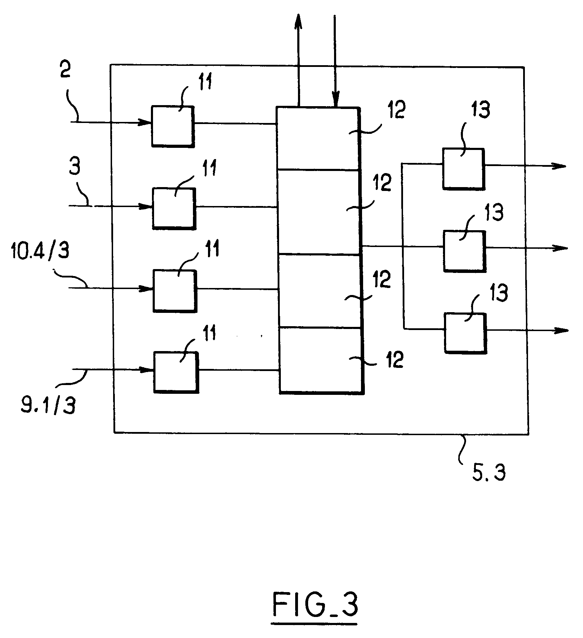

- la figure 3 est une représentation schématique d'une unité de contrôle de grappe selon l'invention.

En référence aux figures, le réseau de communication selon le mode de réalisation préféré illustré comporte une boucle généralement désignée en 1, et comportant deux lignes de transmission principales s'étendant parallèlement l'une à l'autre, une ligne de transmission principale proprement dite 2 et une ligne de duplication 3. La boucle 1 associe une pluralité de grappes généralement désignées en 4, la référence numérique étant assortie d'un numéro d'ordre permettant de différencier les différentes grappes ainsi que les organes qui leur sont associés selon une désignation 4.1, 4.2....

Chaque grappe 4 comporte une unité de contrôle de grappe 5 destinée à assurer un interface entre la boucle 1 et les utilisateurs 6 associés à la grappe tels que des téléphones, des télex, des télécopieurs, des ordinateurs, etc.

Le réseau comporte également deux unités de contrôle de boucle 7 montées en duplex et associées aux lignes de transmission principales 2 et 3 pour assurer un contrôle général du fonctionnement de la boucle et des grappes qui lui sont associées.

Dans le mode de réalisation illustré, le réseau est un réseau à trame synchrone et comporte à cet effet trois unités de synchronisation de boucle 7 chacune associée à une unité de contrôle de grappes et dont le protocole d'exploitation sera analysé ci-dessous.

Certaines grappes sont reliées par une ligne de court-circuit 9 à une grappe non-adjacente disposée en aval par référence à un sens de propagation des signaux dans la boucle. La référence numérique des lignes de court-circuit fait ressortir le numéro d'ordre de la grappe d'origine et le numéro d'ordre de la grappe d'arrivée. Par exemple la ligne de court-circuit 9.1/3 relie la grappe ayant le numéro d'ordre 1 à la grappe ayant le numéro d'ordre 3, la ligne de circuit 9.3/6 relie la grappe d'ordre 3 à la grappe d'ordre 6, etc.

Par ailleurs, le réseau comporte des lignes de rebroussement 10 reliant une grappe, de préférence une grappe équipée d'une ligne de court-circuit, à une grappe disposée en amont par référence à un sens de propagation des signaux dans la boucle. De même que pour les lignes de court-circuit, les lignes de rebroussement sont notées par une référence numérique indiquant la grappe d'origine et la grappe d'arrivée. Par exemple, la ligne 10.3/2 désigne la ligne de rebroussement reliant la grappe d'ordre 3 à la grappe d'ordre 2.

Chaque unité de contrôle de grappe 5 comporte une série de récepteurs 11 chacun associé à l'une des lignes entrant dans la grappe, une série d'unités de traitement 12 associée à chaque récepteur et une série d'émetteurs 13 associés aux lignes sortant de la grappe. L'unité de contrôle de grappes 5 sélectionne le récepteur 11 auquel est associée la plus grande priorité, selon un protocole qui va être expliqué ci-dessous, et ne traite que le signal correspondant, mais l'émission sur les lignes de sortie d'une grappe est faite simultanément par tous les émetteurs 13 afin d'acheminer un seul signal vers les grappes aval.

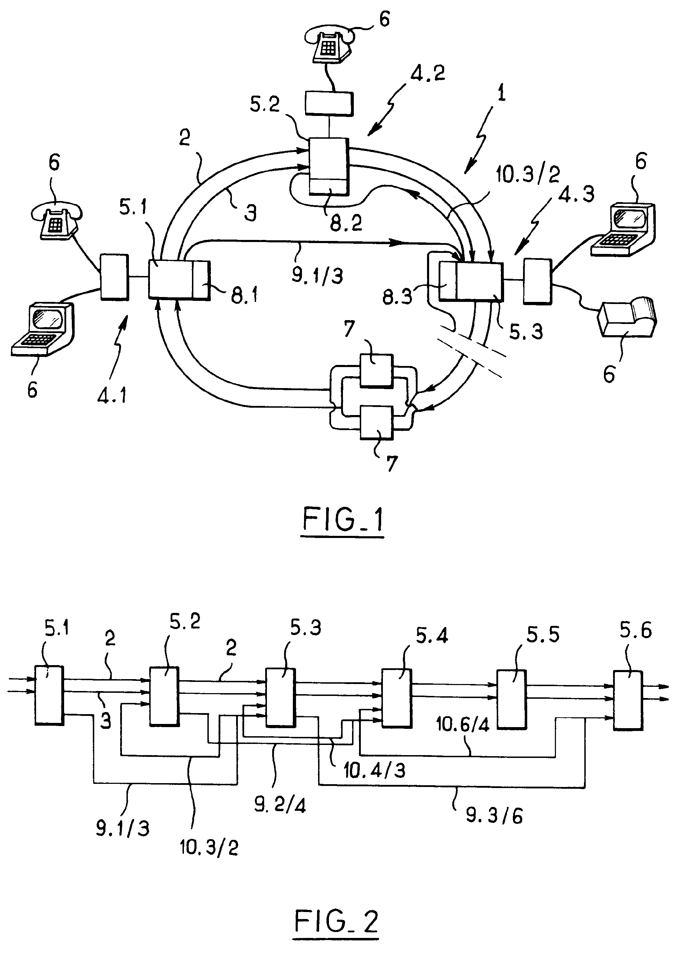

Pour sélectionner le signal qui va être traité en entrée, l'unité de contrôle de grappe vérifie tout d'abord si un signal lui parvient normalement sur la ligne principale 2. C'est ce signal qui a la plus grande priorité. Dans le cas d'une défaillance de signal sur la ligne principale 2, l'unité de contrôle de grappe analyse si un signal est reçu sur la ligne de duplication 3 et traite alors le signal reçu. Si aucun signal n'est reçu sur la ligne principale 2 ou la ligne de duplication 3, ce qui est un signe soit de défaillance simultanée des lignes 2 et 3 soit un signe de défaillance de la grappe immédiatement en amont, l'unité de contrôle de grappe cherche à reconstituer la boucle la plus complète en utilisant les lignes de court circuit et les lignes de rebroussement. Par exemple, en référence à la figure 2, si les lignes principales 2 et 3 sont coupées entre la grappe d'ordre 1 et la grappe d'ordre 2, la boucle complète pourra être reconstituée par le biais de la ligne de court-circuit 9.1/3 associée à la ligne de rebroussement 10.3/2 qui ramèneront le signal issu de la grappe d'ordre 1 à l'entrée de la grappe d'ordre 2, la liaison entre la grappe d'ordre 2 et la grappe d'ordre 3 s'effectuant normalement par la ligne principale 2. Dans ce même exemple, si les lignes principales sont coupées à la fois entre les grappes d'ordre 1 et 2 et les grappes d'ordre 2 et 3, la grappe d'ordre 2 restera dans la boucle en utilisant non seulement la ligne de court-circuit 9.1/3 et la ligne de rebroussement 10.3/2 mais également la ligne de court-circuit 9.2/4 et la ligne de rebroussement 10.4/3. Si la grappe d'ordre 2 est elle-même hors service, la boucle sera simplement rétablie par ligne de court-circuit 9.1/3 associant la grappe d'ordre 1 à la grappe d'ordre 3.

De même qu'il est utile de reconstituer une boucle lorsque celle-ci est partiellement détruite, on prévoit selon un aspect avantageux de l'invention de répartir des unités de synchronisation de boucle 8 en différents points de la boucle afin de minimiser le risque de mise en panne totale de la boucle. Toutefois, chacune des unités de synchronisation de boucle a son rythme propre qui, même s'il est très proche de celui des autres unités de synchronisation de boucle, est néanmoins différent de ceux-ci. Les différentes unités de synchronisation de boucle ne peuvent donc pas simultanément servir de référence pour l'émission de la trame et il est nécessaire de définir des priorités entre les unités de synchronisation de boucle. Lorsque le réseau en boucle est associé à un réseau externe, l'unité de synchronisation de boucle ayant la priorité est de préférence une unité de synchronisation de boucle synchronisées avec ce réseau externe. Une unité de synchronisation de boucle tend à devenir l'unité de synchronisation de boucle de référence dès l'instant où elle n'est pas synchronisée en amont et il appartient alors à une grappe située en aval et qui reçoit des trames provenant de différentes unités de synchronisation de boucle , de décider celle des unités de synchronisation de boucle qui a la priorité.

Par exemple, dans le cas envisagé plus haut où les lignes principales 2 et 3 sont coupées entre la grappe d'ordre 1 et la grappe d'ordre 2 et en supposant que la ligne de rebroussement 10.3/2 soit également défectueuse, l'unité de synchronisation de boucles 8.2 qui ne perçoit aucun signal synchronisé en amont va s'instaurer unité de synchronisation de boucle de référence et émettre une trame vers la grappe d'ordre 3. Simultanément, si l'unité de synchronisation de boucle 8.1 reste en service et est synchronisée sur un réseau externe tel que le réseau public, l'unité de synchronisation de boucle 8.1 va également envoyer des éléments de trame vers la grappe d'ordre 3 par l'intermédiaire de la ligne de court-circuit 9.1/3. Dans ce cas, c'est à la grappe d'ordre 3 qu'une discrimination va être effectuée et qu'il va être déterminé que l'unité de synchronisation de boucle 8.1 a la priorité. Dans le cas où deux unités de synchronisation de boucle sont au même degré de synchronisme, par exemple si elles sont toutes les deux synchrones avec un réseau externe, on donne néanmoins une priorité à l'une des unités de synchronisation de boucle, par exemple à l'unité de synchronisation de boucle ayant le numéro d'ordre le plus faible. Lorsqu'aucune unité de synchronisation de boucle n'est synchronisée avec le réseau externe, on donne de préférence la priorité à une unité de synchronisation de boucle qui reste synchronisée en amont.

Bien entendu l'invention n'est pas limitée au mode de réalisation décrit et on peut y apporter des variantes de réalisation sans sortir du cadre de l'invention. En particulier, bien que l'invention ait été décrite pour la sécurisation d'un réseau comportant une seule boucle, on peut également appliquer l'invention à un réseau comportant plusieurs boucles associées les unes aux autres par une boucle fédératrice comme décrit dans le brevet français déposé ce jour sous le titre "réseau de communication en boucle à trame synchrone" qui est incorporé ici par référence. De même, la boucle peut avoir un accès monojeton ou un accès multijetons comme décrit dans le brevet français déposé ce jour sous le titre "procédé de transmission d'informations entre des unités reliées à une boucle de transport d'informations" et qui est incorporé ici par référence.

## Revendications

1. Réseau de communication en boucle comportant au moins une unité de contrôle de boucle (7), une pluralité de grappes (4) reliées en série par au moins une ligne principale (2, 3), au moins une ligne de court-circuit (9) reliant une première grappe à une seconde grappe non-adjacente à la première grappe et disposée en aval de celle-ci en référence à un sens de propagation de signaux dans la boucle, et des moyens (5) pour privilégier une transmission par un tronçon de boucle comportant au moins une grappe intermédiaire entre la première et la seconde grappe caractérisé en ce qu'il comporte au moins une ligne de rebroussement (10) reliant la seconde grappe à une grappe intermédiaire disposée entre la première et la seconde grappe.

2. Réseau de communication selon la revendication 1, caractérisé en ce qu'il comprend au moins une première unité de synchronisation de boucle (8.1) et une seconde unité de synchronisation de boucle (8.2, 8.3) disposées en des points séparés de la boucle, et des moyens (5) pour donner une priorité à l'une des unités de synchronisation de boucle.

3. Réseau de communication selon la revendication 2, associé à un réseau externe, caractérisé en ce que la priorité est donnée à une unité de synchronisation de boucle synchronisée avec le réseau externe.

4. Réseau de communication selon la revendication 2 ou la revendication 3, caractérisé en ce que la priorité est donnée à une unité de synchronisation de boucle qui apparaît synchronisée avec au moins une unité de synchronisation de boucle disposée en amont.

## Patentansprüche

1. Schleifenkommunikationsnetz mit zumindest einer Schleifensteuereinheit (7), einer Vielzahl von Mehrfachstationen (4), die über zumindest eine Hauptleitung (2,3) in Reihe geschaltet sind, zumindest einer Kurzschlußleitung (9), die eine erste Mehrfachstation mit einer zweiten Mehrfachstation verbindet, die der ersten Mehrfachstation nicht benachbart ist und in bezug auf die Richtung der Signalweiterleitung in der Schleife stromabwärts der ersten Mehrfachstation angeordnet ist, und mit Mitteln (5), die einer Übertragung durch einen Abschnitt der Schleife, in welchem zwischen der ersten und der zweiten Mehrfachstation zumindest eine zwischengeschaltete Mehrfachstation angeordnet ist, Vorrang gewähren, gekennzeichnet durch zumindest eine Umkehrleitung (10), die die zweite Mehrfachstation mit einer zwischengeschalteten Mehrfachstation, die zwischen der ersten und der zweiten Mehrfachstation angeordnet ist, verbindet.

2. Kommunikationsnetz nach Anspruch 1, gekennzeichnet durch zumindest eine erste Schleifensynchronisationseinheit (8.1) und eine zweite Schleifensynchronisationseinheit (8.2, 8.3), die an getrennten Stellen der Schleife angeordnet sind, und Mittel (5), die einer der Schleifensynchronisationseinheiten eine Priorität einräumen.

3. Kommunikationsnetz nach Anspruch 2, das mit einem externen Netz verbunden ist, dadurch gekennzeichnet, daß die Priorität einer mit dem externen Netz synchronisierten Schleifensynchronisationseinheit eingeräumt wird.

4. Kommunikationsnetz nach Anspruch 2 oder 3, dadurch gekennzeichnet, daß die Prioriät einer Schleifensynchronisationseinheit eingeräumt wird, die mit zumindest einer stromaufwärts angeordneten Schleifensynchronisationseinheit synchronisiert erscheint.

## Claims

1. A loop communication network comprising at least one loop control unit (7), a plurality of nodes (4) connected in series by at least one main line (2, 3), at least one short-circuit line (9) connecting a first node to a second node which is not adjacent to the first node and disposed downstream thereof with reference to a direction of propagation of signals in the loop, and means (5) for privileging a transmission by way of a portion of loop comprising at least one intermediate node between the first and second nodes, characterised in that it comprises at least one retrogression line (10) connecting the second node to an intermediate node disposed between the first and second nodes.

2. A communication network according to claim 1 characterised in that it comprises at least a first loop synchronisation unit (8.1) and a second loop synchronisation unit (8.2, 8.3) which are disposed at separate points on the loop, and means (5) for giving a priority to one of the loop synchronisation units.

3. A communication network according to claim 2 which is associated with an external network characterised in that priority is given to a loop synchronisation unit which is synchronised with the external network.

4. A communication network according to claim 2 or claim 3 characterised in that priority is given to a loop synchronisation unit which appears synchronised with at least one upstream-disposed loop synchyronisation unit.
